# EUROPEAN PATENT APPLICATION

(11) **EP 1 308 695 A1**
(43) Date of publication of application: **07.05.2003**
(21) Application number: 02257621.9
(22) Date of filing: 04.11.2002
(51) Int. Cl.: G01C 21/36, G08G 1/0969

(54) **Vehicle mounted display system**

(30) Priority: 06.11.2001 JP 2001340697
(71) Applicant: MATSUSHITA ELECTRIC INDUSTRIAL CO., LTD., Kadoma-shi, Osaka 571-8501 (JP)
(72) Inventor: Watanabe, Kazuhiro, Kadoma-shi, Osaka-fu, 571-0064 (JP); Fujikawa, Satoru, Nara-shi, Nara-ken, 630-8101 (JP); Osaka, Masataka, Osaka-shi, Osaka-fu, 545-0022 (JP)
(74) Representative: Crawford, Andrew Birkby

(57) **Abstract**

A vehicle-mounted display system (10,11,12) including: a first display panel (11); a second display panel (12); an image data fetching unit operable to fetch-first image data and second image data; a first display control unit operable to display the first image data on the first display panel; an instruction unit operable to issue an instruction to display a composite image; and a second display control unit operable to receive the instruction, generate the composite image by combining the first image data with the second image data, and display the composite image on the second display panel (12).

## Description

### BACKGROUND OF THE INVENTION

### (1) Field of the Invention

The present invention relates to a vehicle-mounted display system in which a common image is simultaneously displayed on two or more displays mounted in a vehicle.

### (2) Description of the Related Art

Vehicle-mounted display systems such as car navigation systems guide the driver to a destination by displaying a map and a current position of the vehicle together on the screen, or provide the occupants of the vehicle with amusement by displaying TV programs or replaying a DVD. Typically, when a vehicle-mounted display system has only one display, the display is mounted on a panel in front of the driver so that the driver can watch the screen. In this case, however, people sitting in the back seat of the vehicle cannot watch the image on the screen.

Japanese Laid-Open Patent Application No. 11-343438 discloses a technique in which an additional display is mounted in a back-seat space so that occupants in the back seat can also watch the car navigation screen image. The system has a switching circuit that switches between images to be displayed on the front-seat display and the back-seat display so that the same image can be displayed simultaneously on the front- and back-seat displays.

With the above-mentioned technique, however, if, for example, a person in the back seat is intently watching a TV program, the person would not switch to a car-navigation screen image being displayed on the front-seat display. In such a case, the car-navigation screen image is not shared by the persons in the front seat and the back seat. As understood from this example, with the conventional technique, it is impossible for persons sitting in the front seat and the back seat to share a common image while watching different images uniquely displayed on the front- and back-seat displays. This is inconvenient for a plurality of vehicle occupants since they usually require common information concerning the destination or the like.

There are other inconveniences relating to the conventional technique. For example, if a vehicle is nearing a sightseeing spot, there is no way for a person in the back seat to know it and he/she loses the opportunity to see the spot, while the driver knows it from a car navigation screen. Also, if a vehicle is nearing a tight turn, a person in the back seat does not know it and has to sway hard by the turn.

Of course, a viewer can switch to a common image from an image that the viewer has been watching. However, it may deprive the viewer of satisfaction that the viewer has obtained from watching the image.

### SUMMARY OF THE INVENTION

The object of the present invention is therefore to provide a vehicle-mounted display system in which each of a plurality of displays mounted in a vehicle can simultaneously display a common image and an image unique to each display.

The above object is fulfilled by a vehicle-mounted display system, comprising: a first display panel; a second display panel; an image data fetching unit operable to fetch first image data and second image data; a first display control unit operable to display the first image data on the first display panel; an instruction unit operable to issue an instruction to display a composite image; and a second display control unit operable to receive the instruction, generate the composite image by combining the first image data with the second image data, and display the composite image on the second display panel.

With the above-described construction, a plurality of displays mounted in a vehicle simultaneously display a common image, as well as images unique to the displays. This enables the occupants of the vehicle to share, simultaneously, the same information through the common image displayed on the plurality of displays.

In the above vehicle-mounted display system, the instruction unit may detect a trigger for issuing the composite image display instruction, based on vehicle position information that indicates a current position of a vehicle.

With the above-described construction, a trigger for simultaneously displaying the first and second image data on the second display panel is detected based on the vehicle position information. Here, if the first image data is a car navigation image showing a map and a current vehicle position, a person watching the second display panel can also watch the car navigation image and share the information with a person watching the first display panel. With this arrangement, the person watching the second displaypanel can notice a coming sightseeing spot or a tight turn in advance.

In the above vehicle-mounted display system, the instruction unit may detect the trigger for issuing the composite image display instruction by comparing the vehicle position information with screen-change position information that is generated beforehand and indicates a position of the vehicle at which the composite image should be displayed.

Also, in the above vehicle-mounted display system, the image data fetching unit may include a bus used for transferring image data including the first image data and/or the second image data to the first display control unit and the second display control unit.

Also, in the above vehicle-mounted display system, each of the first display control unit and the second display control unit may include : a receiving unit operable to receive a plurality of image planes that are composed of image data; a calculation unit operable to select two or more image planes out of the plurality of image planes and performing an arithmetic and logic operation on the selected image planes; and an output unit operable to output image data reflecting a result of the arithmetic and logic operation, to each display panel.

With the above-described construction, any image planes selected from a plurality of image planes may be combined for display.

In the above vehicle-mounted display system, each of the first display control unit and the second display control unit may include a pixel counting unit operable to count the number of pixels of each of the selected image planes in a horizontal direction and a vertical direction, and extracting rectangular-area data from each of the selected image planes, and the calculation unit performs the arithmetic and logic operation on the extracted rectangular-area data.

With the above-described construction, any rectangular-area data may be extracted from the selected image planes, and the extracted rectangular-area data may be combined with other image planes so as to be displayed.

The above first vehicle-mounted display system may further comprise: a data request transmitting unit operable to receive data requests issued from the first and second display control units and transmitting the received data requests to a memory one by one in order of precedence; a data request converting unit operable to, if the data request transmitting unit receives two or more data requests for a same piece of data in the memory, convert the two or more data requests into one data request; and a broadcasting unit operable to broadcast data output from the memory to the first and second display control units.

With the above-described construction, data fetched from the memory is broadcast to a plurality of display control apparatuses. This reduces the number of data requests the memory receives and reduces the number of times the display control apparatuses access the memory, resulting in improvement of the bus traffic and reduction of the hardware cost.

The above vehicle-mounted display system may further comprise: an address adding unit operable to add an address in the memory to the data to be broadcast by the broadcasting unit; and an address checking unit operable to check the address added to the broadcast data.

With the above-described construction, it is assured that each display control apparatus can display the data the display control apparatus has requested even if the requested data is modified.

The above first vehicle-mounted display system may further comprise: a local buffer which is connected to the first and second display control units and stores part or all of image data; and a controller which is connected to a memory via a bus and determines whether data requested by the first and second display control units should be fetched from either the memory or the local buffer.

With the above-described construction, part or all of image data fetched from the memory is stored in the local buffer, from which the data can be sent as requested. This reduces the number of times the display control apparatuses access the memory, resulting in improvement of the bus traffic and reduction of the hardware cost.

The above vehicle-mounted display system may further comprise: an address management unit operable to manage addresses of shared data in the memory, the shared data being shared by the first and second display control units; a request receiving unit operable to receive a data request for the shared data from one of the first and second display control units; a data storage control unit operable to control the display control unit that has issued the shared data request so as to store the shared data in a local buffer; and a data source controlling unit operable to control the other display control unit so as to fetch the shared data from the local buffer.

Also, the above first vehicle-mounted display system may further comprise: a data source controlling unit operable to fetch shared data from the memory, the shared data being shared by the first and second display control units, extracting a desired amount of image data from the shared data, storing the extracted image data in a local buffer, and performing control so that if the shared data is requested, the extracted image data in the local buffer is sent to a requester of the shared data.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
Fig. 1 is a block diagram showing the construction of a vehicle-mounted display system 1;
Fig. 2 shows a detailed construction of the main body 10 and how images displayed on display apparatuses are changed;
Fig. 3 shows screen-change position information;
Fig. 4 shows the operation of the vehicle-mounted display system 1, when either operator input or predetermined input instructions are automatically set to request a composite mode image display;
Fig. 5 shows a vehicle-mounted display system which combines images by the plane combining method;
Fig. 6 shows a construction of the vehicle-mounted display system for extracting image planes;
Fig. 7 shows the procedure of the image plane extraction;
Fig. 8 shows timing with which images or image signals are output;
Fig. 9 shows how image data is combined;
Fig. 10 shows the construction of a vehicle-mounted display system 100 with improvement in the bus traffic;
Fig. 11 shows the construction of the front-seat display control apparatus 102 andtheback-seat display control apparatus 104;
Fig. 12 shows image data fetched by the system;
Fig. 13 shows the operation of the system;
Fig. 14 shows output timing in the system;
Fig. 15 shows how the back-seat display control apparatus 104 receives the broadcast data;
Fig. 16 shows the construction of a vehicle-mounted display system 160 with improvement in the bus traffic;
Fig. 17 shows image data fetched by the system; and
Fig. 18 shows the operation of the system.

### DESCRIPTION OF THE PREFERRED EMBODIMENT

The following describes a vehicle-mounted display system in an embodiment of the present invention, with reference to the drawings.

### Construction

The vehicle-mounted display system in the present embodiment receives information indicating the position of a vehicle mounting the display system from a satellite under a global positioning system (GPS), analyzes the position information, and displays on the screens of the display apparatuses a map indicating the current position of the vehicle . The vehicle-mounted display system can also display TV broadcast programs or replay visual or audio contents recorded on a recording medium such as an optical recording medium (for example, DVD). In the present embodiment, a display apparatus of the back seat is arranged to display images in two display modes so that, for example, a person sitting in the back seat can enjoy watching a movie while being able to recognize the current position by a reduced front-seat image of a map indicating the current position of the vehicle that is superimposed on the back-seat display screen from time to time with certain timing.

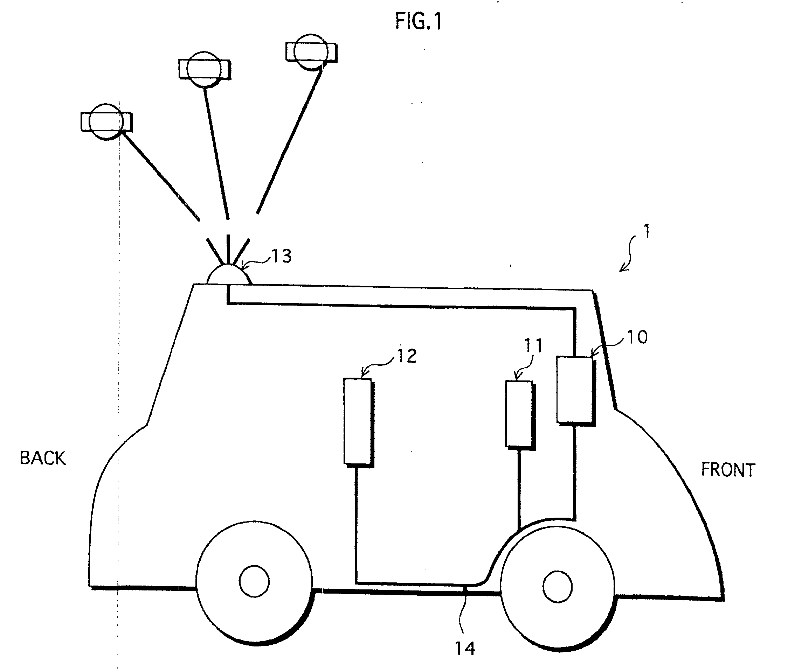

Fig. 1 is a block diagram showing the construction of a vehicle-mounted display system 1.

As shown in Fig. 1, the vehicle-mounted display system 1 is composed of a main body 10, a front-seat display apparatus 11, a back-seat display apparatus 12, a GPS antenna 13, and a bus 14.

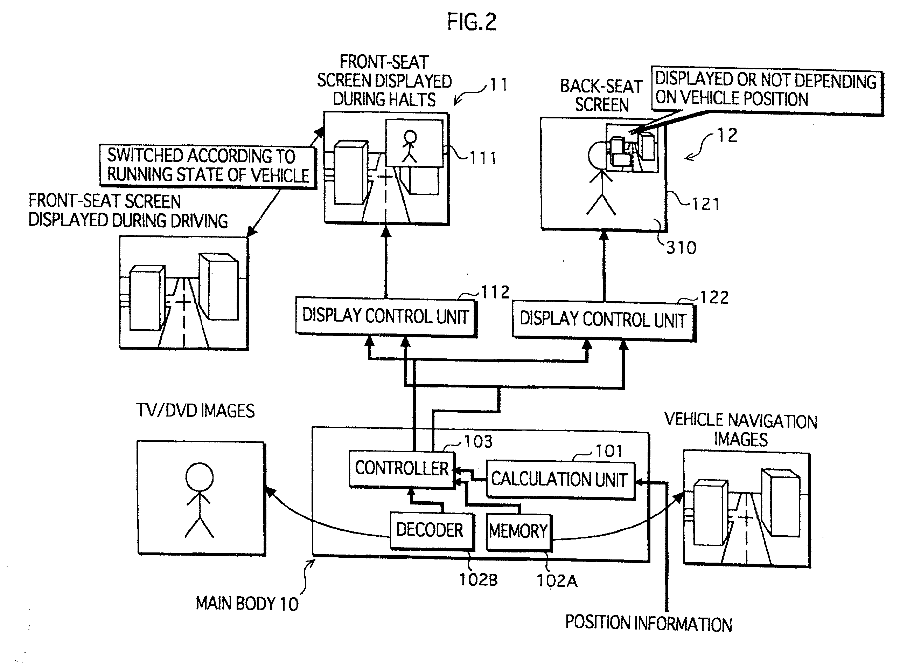

Fig. 2 shows a detailed construction of the main body 10 and how images displayed on display apparatuses are changed.

As shown in Fig. 2, the main body 10 is composed of: a calculation unit 101 that receives the position information from the GPS antenna, analyzes the position information, and calculates the current position of the vehicle; a memory 102A that stores various types of image data; a decoder 102B; and a controller 103 that reads data from the memory 102A and the decoder 102B and controls (a) the amount of image data to be output, (b) output destinations, and (c) switches between a composite image display mode and a single image display mode.

The controller 103 contains a CPU and a memory in which various programs are stored. The controller 103 selects a data reading source and a data sending destination to display respective images on the front-seat display apparatus 11 and the back-seat display apparatus 12, where the selection is made in different ways for the single image display mode and the composite image display mode.

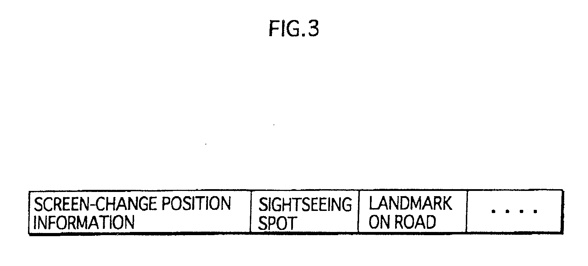

It should be noted that in the composite image display mode, as shown in Fig. 3, the image currently displayed on the front-seat display apparatus is superimposed as a reduced image on the screen of the back-seat display apparatus, and that in the single image display mode, images are displayed normally on the back-seat display apparatus.

In the single image display mode, the controller 103 changes a data reading source and a data sending destination for each frame, namely, in a cycle of one frame, alternately for the front-seat display apparatus 11 and the back-seat display apparatus 12. It is supposed here that image data such as a map and position information stored in a memory is displayed on the front-seat display apparatus 11, and that image data output from the decoder 102B is displayed on the back-seat display apparatus 12. In this condition, the controller 103 reads one frame of image data from the memory 102A and outputs the read image data to the front-seat display apparatus 11. The controller 103 then reads one frame of image data from the decoder 102B and outputs the read image data to the back-seat display apparatus 12. In this way, the controller 103 changes a data reading source and a data sending destination for each frame, namely, in a cycle of one frame.

In the composite image display mode, the controller 103 determines the amount of data and changes a data reading source and a data sending destination so that image data for the front-seat display apparatus is also output to the back-seat display apparatus 12.

The controller 103 judges whether to switch between the single image display mode and the composite image display mode. In the present example, the timing with which the display modes is switched from the single image display mode and the composite image display mode matches the timing with which a map image displayed on the front-seat display apparatus is changed to another map image. As a result, the judgment is made using the position information. More specifically, the controller 103 compares the position information with screen-change position information that is stored beforehand and indicates a position at which a map image should be changed to another, and judges whether the current vehicle position calculated from the position information has reached the screen-change position. When it is judged positively, the map image displayed on the front-seat display apparatus is changed to another one, and the judgment result becomes a trigger to switch from the single image display mode to the composite image display mode.

As shown in Fig. 3, the screen-change position information may specify a sightseeing spot (a temple, a valley, etc.) or a landmark on the road (a corner, a railroad crossing, an intersection, etc.) to indicate the position at which a map image should be changed to another. Each position on a map is assigned a piece of attribute information (also referred to as a map attribute) that corresponds to a piece of screen-change position information. The map attributes are stored in a storage unit (memory) in which a map displaying program is also stored. The judgment on whether the current vehicle position has reached the screen-change position is made by comparing a piece of attribute information corresponding to the current vehicle position with the screen-change position information.

The user may select the position at which a map image should be changed to another and which is indicated by the screen-change position information. In that case, the user selects it via a user interface.

The front-seat display apparatus 11 is a display mounted in a space near the front seat of the vehicle, and may be any type of display such as LCD, PDP, EL, and CRT. The front-seat display apparatus 11 is composed of a display panel 111 and a display control unit 112 that includes an output unit operable to store image data and output an image to the display panel 111.

The back-seat display apparatus 12 is mounted in a space near the back seat of the vehicle, and may be any type of display such as LCD, PDP, EL, and CRT. The back-seat display apparatus 12 is composed of a display panel 121 and a display control unit 122 that includes an output unit operable to store image data, combining images, and outputting a composite image to the display panel 121. The display control unit 122 has a flag that indicates whether an image display is performed in the single image display mode or the composite image display mode. When the flag, also referred to as a composite image display flag, is set to a value "1", it indicates the composite image display mode, and when the flag is set to a value "0", it indicates the single image display mode.

The GPS antenna 13 receives from a satellite a signal containing the position information, and outputs the received signal to the main body 10. The GPS antenna 13 is mounted on the roof of the vehicle.

The bus 14 is a transmission path having a certain width, connecting the main body 10 with the display apparatuses 11 and 12 enabling data to be transmitted between them, and is installed on the floor of the vehicle.

### Operation

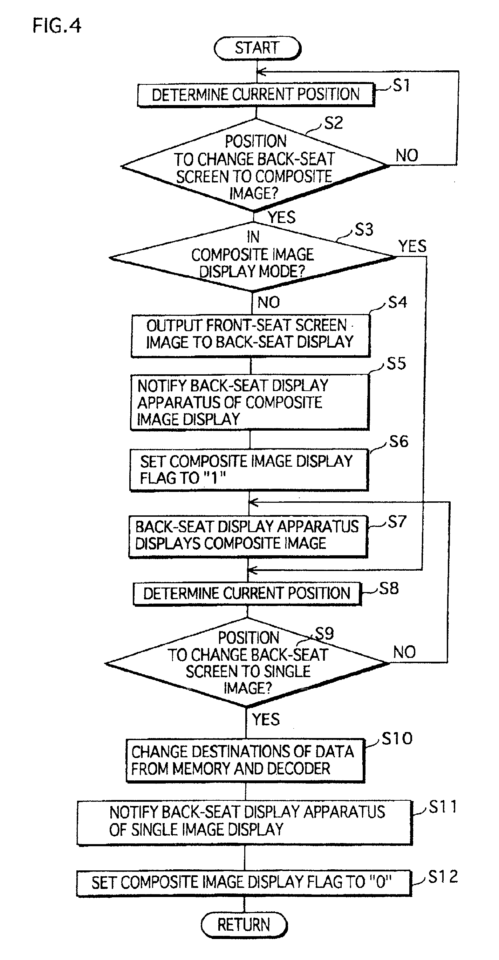

Fig. 4 shows the operation of the vehicle-mounted display system 1, when either operator input or predetermined input instructions are automatically set to request a composite mode image display.

In step S1, the controller 103 determines the current position of the vehicle based on the analysis results of the position information by the calculation unit 101. The control then moves to step S2.

In step S2, the controller 103 judges whether the current vehicle position has reached the screen-change position where the display mode of the back-seat display apparatus should be changed from the single image display mode to the composite image display mode. If it is judged positively, the control moves to step S3. If it is judged negatively, the control returns to step S1.

In step S3, controller 103 judges whether the back-seat display apparatus is in the composite image display mode by referring to the composite image display flag. If the flag is set to "1" (Yes), the control jumps to step S8. If the flag is set to "0" (No), the control goes to step S4.

In step S4, the controller 103 outputs an image for the front-seat display apparatus to both the front-seat display apparatus and the back-seat display apparatus. The control then moves to step S5.

In step S5, the controller 103 notifies the back-seat display apparatus that the display mode changes to the composite image display mode. The control then moves to step S6.

In step S6, the back-seat display apparatus sets the composite image display flag to "1". The control then moves to step S7.

In step S7, the back-seat display apparatus displays a composite image in which an image being displayed on the front-seat display apparatus is superimposed as a reduced image on an image for the back-seat display apparatus. An example of the image displayed here in the back-seat display apparatus is shown in Fig. 2. In this example, the back-seat display apparatus displays a TV broadcast program in the single image displaymode, and in the composite image displaymode, it displays the image of the front-seat display apparatus as well, that is a map and the position information. The control then moves to step S8.

In step S8, the controller 103 determines the current position of the vehicle based on the analysis results of the position information by the calculation unit 101.

In step S9, the controller 103 judges whether the current vehicle position has reached a position where the display mode of the back-seat display apparatus should be changed from the composite image display mode to the single image display mode. For example, the position where the display mode of the back-seat display apparatus should be changed from the composite image displaymode to the single image displaymode is at a predetermined distance from the screen-change position. If it is judged positively, the control moves to step S10. If it is judged negatively, the control returns to step S7.

In step S10, the controller 103 outputs image data from the memory 102A to the front-seat display apparatus 11, and outputs image data from the decoder 102B to the back-seat display apparatus 12. The control then moves to step S11.

In step S11, the controller 103 notifies the back-seat display apparatus 12 that the display mode changes to the single image display mode. The control then moves to step S12.

In step S12, the back-seat display apparatus sets the composite image display flag to "0".

From this time onward, the composite image display mode continues until it is judged in step S2 that the current vehicle position has reached the screen-change position.

As described above, the vehicle-mounted display system of the present invention can superimpose an image being displayed on the front-seat display apparatus on an image displayed on the back-seat display apparatus. With this arrangement, people watching the front-seat and back-seat displays can share the same information.

Also, the vehicle-mounted display system of the present invention gives consideration to a special case in which the occupants in a vehicle have different viewing ranges. That is to say, typically, a person sitting in the back seat watches a screen of a display mounted in the back seat, and cannot watch a screen of a display mounted in the front seat. The vehicle-mounted display system of the present invention, however, superimpose the front-seat display image on the back-seat display image so that the person sitting in the back seat can watch the front-seat display image as well as the back-seat display image.

### Others

(1) In the present embodiment, the display mode is changed from the single image display mode to the composite image display mode, based on the current position of the vehicle. However, the display mode may be changed when a certain button is pressed via an interface by a person sitting in the front or the back seat.
(2) The front-seat display apparatus may display images in two displaymodes such as above-described ones . For example, a speed sensor may be mounted on the vehicle, and the display mode of the front-seat display apparatus may be automatically changed from the single image display mode (in which a car navigation screen showing a map and the position information is displayed, for example) to the composite image display mode (in which a TV broadcast image is superimposed on the car navigation screen image, for example) every time the vehicle speed becomes zero (see Fig. 2). The display mode may be changed when a certain button is pressed by a user via an interface.
(3) In the present embodiment, two display apparatuses are used. However, the present invention may be applied to any number of display apparatuses.

The following is a description of a technique for reading image data from a memory, combining images, and outputting a composite image to a display.

### Image Processing Technique: Plane Combining

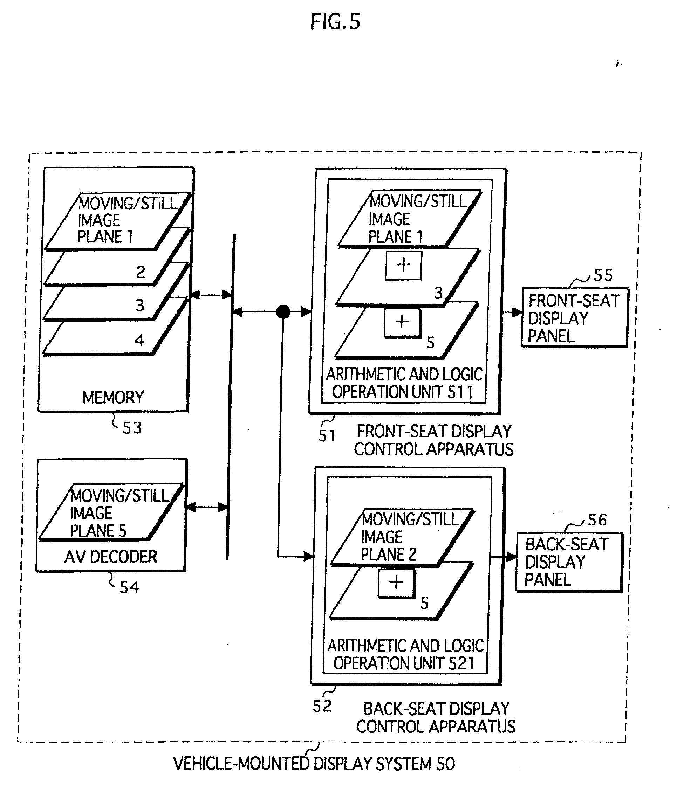

Fig. 5 shows a vehicle-mounted display system 50 which combines images by the plane combining method.

The vehicle-mounted display system 50 includes: a memory 53 that stores moving image planes and still image planes; an AV decoder 54 that outputs image data; a front-seat display panel 55, aback-seat displaypanel 56, and a front-seat display control apparatus 51 and a back-seat display control apparatus 52 each of which receives image data from the memory 53 and the AV decoder 54, selects image planes, and outputs any image planes to the front-seat display panel 55 and the back-seat display panel 56. It should be noted that one image plane is one frame of image data.

The front-seat display control apparatus 51 and the back-seat display control apparatus 52 have arithmetic and logic operation units 511 and 512, respectively. These arithmetic and logic operation units per form arithmetic and logic operations on any selected image planes. For example, as a result of such operations, a composite image in which a translucent image plane is superimposed on a moving image plane is output. Fig. 5 indicates that the arithmetic and logic operation unit 511 outputs a composite image in which image planes 1, 3, and 5 are combined together, and that the arithmetic and logic operation unit 512 outputs a composite image in which image planes 2 and 5 are combined together.

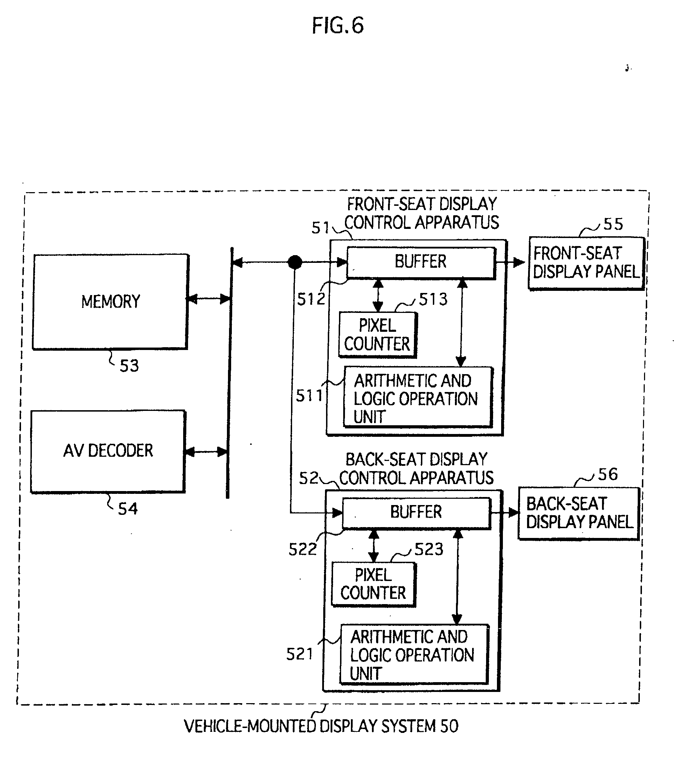

Fig. 6 shows a construction of the vehicle-mounted display system 50 in which the front-seat display control apparatus 51 and the back-seat display control apparatus 52 extract image planes from the fetched image planes.

As shown in Fig. 6, the front-seat display control apparatus 51 includes: a buffer 512 that stores part or all of fetched moving/still image planes; a pixel counter 513 that counts pixels of the received image planes and stores extracted rectangular-area data in the buffer 512; and the arithmetic and logic operation unit 511 that combines image planes. The back-seat display control apparatus 52 includes a buffer 522, a pixel counter 523, and the arithmetic and logic operation unit 521 which operate in the same way as the buffer 512, the pixel counter 513, and the arithmetic and logic operation unit 511, respectively.

Now, how an image plane is extracted from fetched image data will be described.

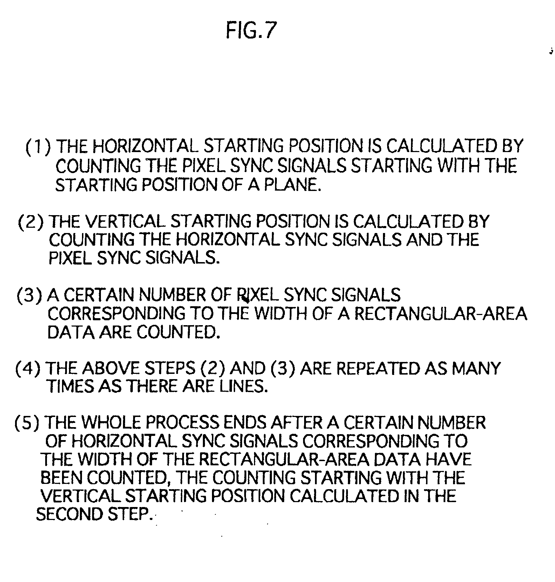

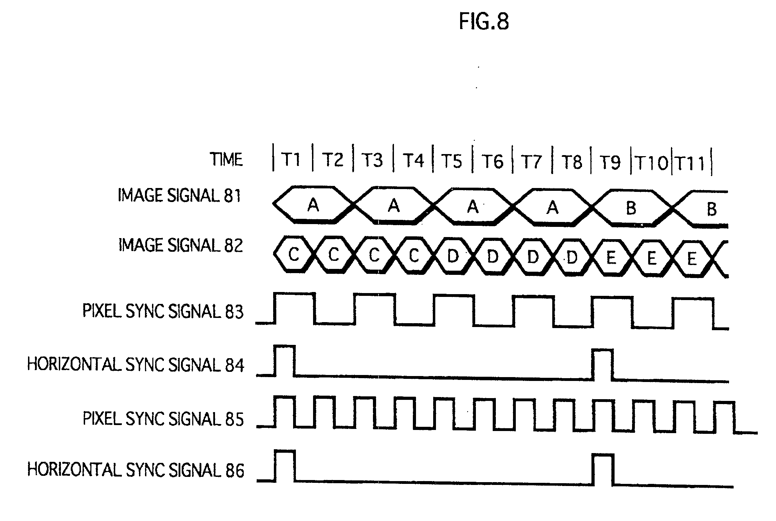

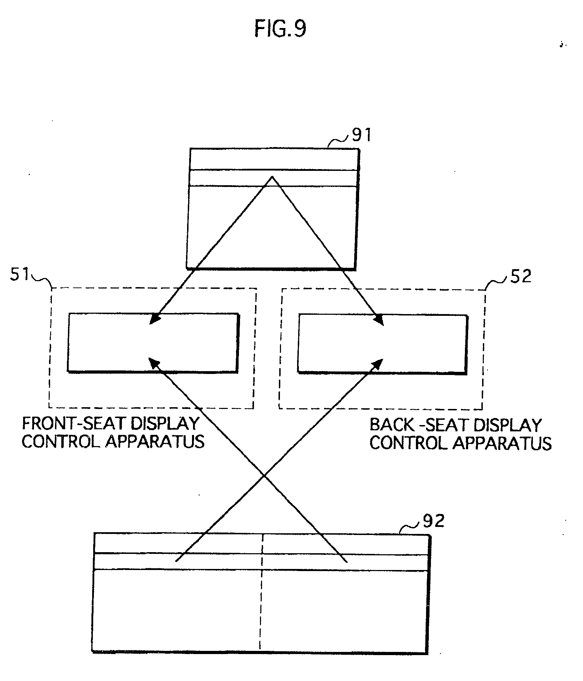

Fig. 7 shows the procedure of the image plane extraction. Fig. 8 shows moving/still image planes fetched by the front-seat display control apparatus 51 or the back-seat display control apparatus 52. In Fig. 8, the image signal 81 represents image data 91 of image planes in Fig. 9, and the image signal 82 represents image data 92 of image planes shown in Fig. 9. The pixel sync signal 83 and the horizontal sync signal 84 both synchronize with the image data 91. The pixel sync signal 85 and the horizontal sync signal 86 both synchronize with the image data 92. The image data 92 is AV data that is displayed at a speed where one image plane is displayed at 1/60 seconds, and that the image data 91 is TV broadcast data that is displayed at a speed where one image plane is displayed at 1/30 seconds. Accordingly, the image signal 82 is approximately double the image signal 81 in the frequency.

The procedure of the image plane extraction shown in Fig. 7 is as follows.

Firstly, the horizontal starting position is calculated by counting the pixel sync signals starting with the starting position of a plane.

Secondly, the vertical starting position is calculated by counting the horizontal sync signals and the pixel sync signals.

Thirdly, a certain number of pixel sync signals corresponding to the width of a rectangular-area data are counted.

Fourthly, the above second and third steps are repeated as many times as there are lines.

Fifthly, the whole process ends after a certain number of horizontal sync signals corresponding to the width of the rectangular-area data have been counted, the counting starting with the vertical starting position calculated in the second step.

It is supposed here that image data is output from the memory on a one-line-by-one-line basis.

The following is a detailed description of the image plane extraction. In the following example, it is supposed that the number of pixels of the image data 91 is "4" in both horizontal and vertical directions (widths), and that the number of pixels of the image data 92 is "8" in the horizontal direction and "4" in the vertical direction.

First, the numbers of pixels respectively making up the horizontal and vertical widths of the image data 91 and 92 are set in the pixel counters 513 and 523. Then, in the pixel counter 513, the horizontal count start of the image data 91 is set to "0", the horizontal count end of the image data 91 is set to "3". Also, in the pixel counter 513, the horizontal count start of the image data 92 is set to "4", the horizontal count end of the image data 92 is set to "7".

Then, in the pixel counter 523, the horizontal count start of the image data 91 is set to "0", the horizontal count end and the vertical count end of the image data 91 are set to "3", respectively. Also, in the pixel counter 523, the horizontal count start of the image data 92 is set to "0", the horizontal count end of the image data 92 is set to "3". As described above, pixel positions for the image data to be extracted are set in the pixel counters 513 and 523. After these settings, the front-seat display control apparatus 51 starts extracting image signals for the image data A at time T1, and image signals for the image data D at time T5. Also, the back-seat display control apparatus 52 starts extracting image signals for the image data A at time T1, and image signals for the image data C at time T1. The image data for the set rectangular-area data is extracted in this way.

It should be noted here that the setting of the horizontal count start determines a position in the vertical direction of the image data to be extracted, and that the setting of the horizontal count end determines the end position in the vertical direction of the image data to be extracted.

As described above, it is possible to extract rectangular-area data with any size from the fetchedmoving/still image planes by using the pixel counters.

The arithmetic and logic operation units 511 and 512 multiply or add any coefficients to select or combine a plurality of pieces of extracted rectangular-area data and output the results to the displays.

Fig. 9 shows how image data is combined. Fig. 9 shows moving/still image planes that are extracted based on the above settings of the pixel counters (the number of pixels of the image data 91 is "4" in both horizontal and vertical directions, and the number of pixels of the image data 92 is "8" in the horizontal direction and "4" in the vertical direction) . In this example, each of the front-seat display control apparatus 51 and the back-seat display control apparatus 52 combines the whole image data 91 with part of the image data 92. That is to say, the image data 92 is divided into two pieces by the pixel counters 513 and 523. Each of the divided image data 92 is combined with the image data 91, and the composite images are output to the front-seat display panel 55 and the back-seat display panel 56, respectively.

In the above example, a plurality of image planes are extracted simultaneously at each set time. However, by using the buffers 512 and 522, each image plane may be extracted separately, followed by the calculations.

In the above example, two display control apparatuses are used. However, any number of display control apparatuses may be used.

### Improvement in Bus Traffic: 1

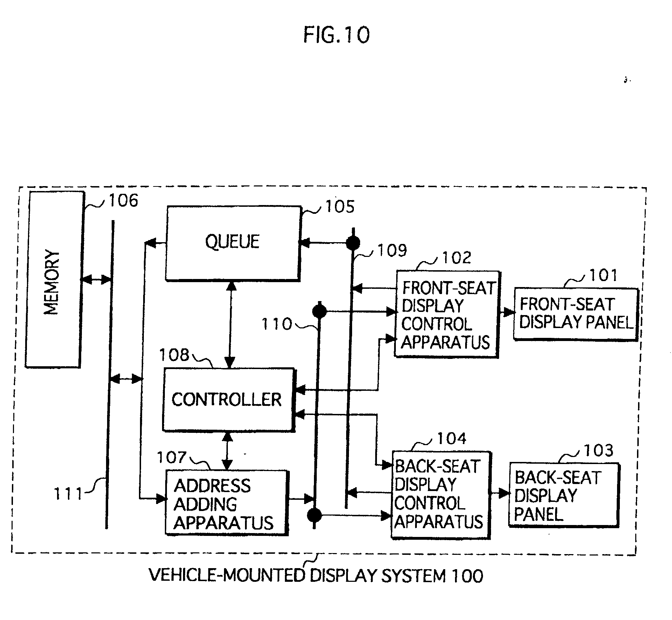

Fig. 10 shows the construction of a vehicle-mounted display system 100 with improvement in the bus traffic.

The vehicle-mounted display system 100 includes: a front-seat display panel 101; a front-seat display control apparatus 102 connected to the display panel 101; a back-seat display panel 103; a back-seat display control apparatus 104 connected to the display panel 103; a queue 105 for storing addresses sent from the front-seat display control apparatus 102 and the back-seat display control apparatus 104 requesting data at the addresses in the memory 106; a memory 106; an address adding apparatus 107 for adding addresses to data fetched from the memory 106; a controller 108 that includes a CPU and a memory storing various control programs, manages the addresses for data requests stored in the queue 105, and controls the address adding apparatus 107; a bus 109 used for transferring the data requests from the front-seat display control apparatus 102 and the back-seat display control apparatus 104; a bus 110 used for broadcasting the data fetched from the memory 106 to all display control apparatuses; and a bus 111 connecting the memory 106, the queue 105, and the address adding apparatus 107 to each other.

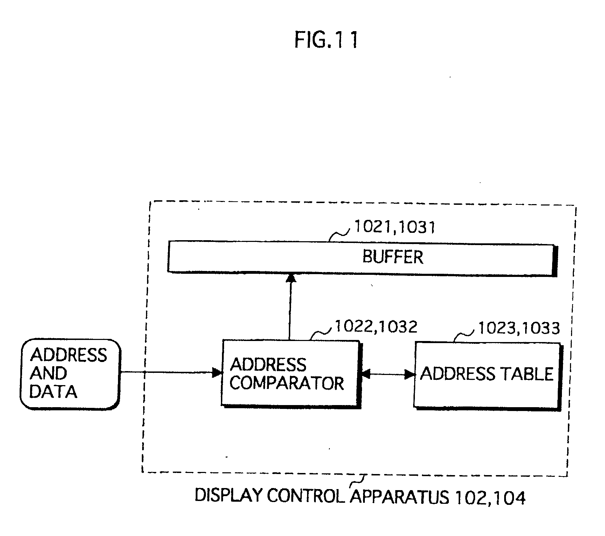

Fig. 11 shows the construction of the front-seat display control apparatus 102 and the back-seat display control apparatus 104. The front-seat display control apparatus 102 includes a buffer 1021 which is connected to the front-seat display panel 101 and stores pixel data; an address comparator 1022; and an address table 1023. The back-seat display control apparatus 104 includes a buffer 1031 which is connected to the back-seat display panel 103 and stores pixel data; an address comparator 1032; and an address table 1033.

The operation of the vehicle-mounted display system with the above-described construction will be explained with reference to Figs. 10-15.

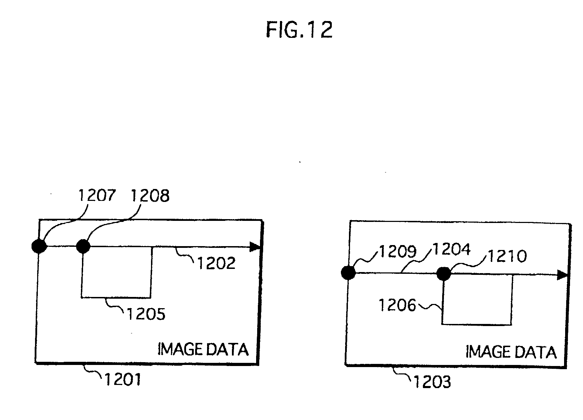

Fig. 12 shows: image data 1201 generated by the front-seat display control apparatus 102 from pixel data fetched from the memory 106; a scan line 1202 for which the front-seat display control apparatus 102 is fetching pixel data; image data 1203 generated by the back-seat display control apparatus 104 from pixel data fetched from the memory 106; and a scan line 1204 for which the back-seat display control apparatus 104 is fetching pixel data.

Now, how pixel data for the scan lines 1202 and 1204 is fetched will be described. It is supposed here that a rectangular-area data 1205 in the image data 1201 and a rectangular-area data 1206 in the image data 1203 consist of the same pieces of pixel data stored in a certain area of the memory 106.

First, the front-seat display control apparatus 102 requests one scan line of pixel data, which starts with a pixel 1207, to the controller 108, and stores an address of the first pixel 1207 in the queue 105. Then, the front-seat display control apparatus 102 requests pixel data that makes up the rectangular-area data 1205, which starts with a pixel 1208, to the controller 108, and stores an address of the first pixel 1208 in the queue 105.

The back-seat display control apparatus 104 requests one scan line of pixel data, which starts with a pixel 1209, to the controller 108, and stores an address of the first pixel 1209 in the queue 105. Then, the back-seat display control apparatus 104 requests pixel data that makes up the rectangular-area data 1206, which starts with a pixel 1210, to the controller 108, and stores an address of the first pixel 1210 in the queue 105.

It should be noted here that in the present example, in response to a request for a certain amount of pixel data that is sent from a display control apparatus with specification of an address of the first pixel of the requested data, the memory 106 sends pixel data on a one-block-by-one-block basis, where one block consists of eight pixels, each pixel consisting of 16 bits, and each block having 128 bits (16 bytes).

Not limited to the above, a display control apparatus may send a request for a certain amount of pixel data with specification of an address of the first pixel of the requested data, and the memory 106 may send pixel data on a one-pixel-by-one-pixel basis.

The controller 108 instructs the queue 105 to output the addresses stored therein one to one to the memory 106 on a First-In-First-Out basis. Upon receiving an instruction to output an address, the queue 105 outputs an address stored therein to the memory 106. The address adding apparatus 107 receives data requested by the address from the memory 106, and broadcasts the received data to all the display control apparatuses.

The front-seat display control apparatus 102 and the back-seat display control apparatus 104 store the addresses attached to the pixel data requests in address tables 1023 and 1033, respectively.

It should be noted here that "broadcasting" is to send the same data to a plurality of destinations.

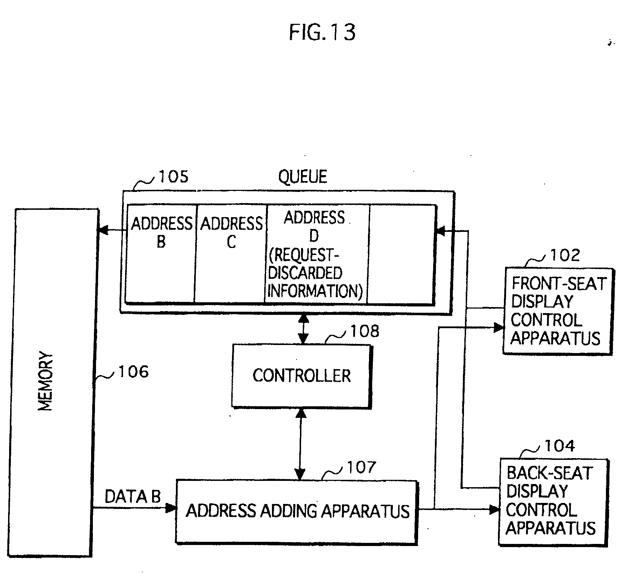

Fig. 13 shows the following sequence of operations. The front-seat display control apparatus 102 first requests one scan line of pixel data, which starts with the pixel 1207 stored at address A in the memory 106. The address adding apparatus 107 receives the requested data from the memory 106 and broadcasts the received data to all the display control apparatuses. The front-seat display control apparatus 102 then requests pixel data that makes up the rectangular-area data 1205, which starts with the pixel 1208 stored at address B in the memory 106. The address adding apparatus 107 receives the requested data from the memory 106. In Fig. 13, "address C" indicates a storage position of the first pixel 1209 of one scan line of pixel data requested by the back-seat display control apparatus 104, and "address D" indicates a storage position of the first pixel 1210 of the rectangular-area data 1206 requested by the back-seat display control apparatus 104. In the present example, it is supposed that the address B and the address D are the same.

After the address adding apparatus 107 receives the data B, the controller 108 searches the queue 105 for addresses that are the same as the address B.

In this example, the controller 108 detects the address D that is the same as the address B. The controller 108 then attaches request-discarded information to the address D. With this arrangement, when the queue 105 is going to send the address D to the memory 106 after sending the address C, the queue 105 discards the address D by recognizing the attached request-discarded information.

When data is broadcast to all the display control apparatuses, an address is broadcast first prior to the data to be broadcast.

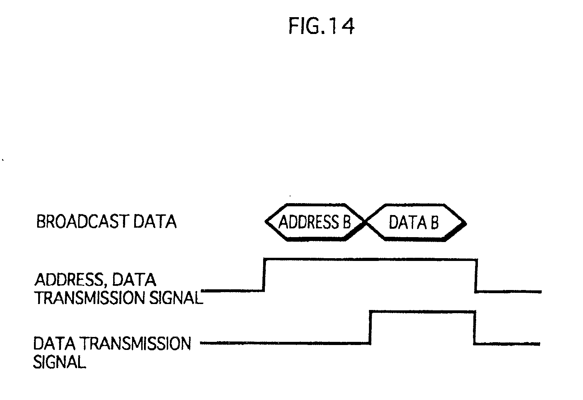

Fig. 14 shows an example of broadcasting. As shown in Fig. 14, the address B attached to the data B is sent before the broadcast data to the display control apparatuses, in which the data B is compared with the addresses held therein as follows.

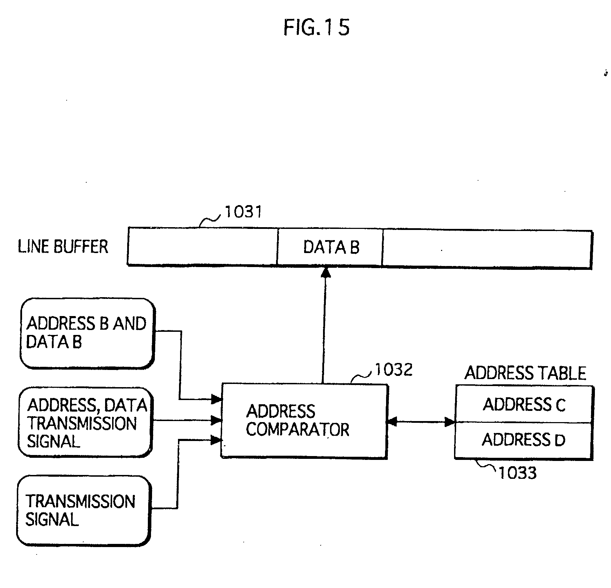

Fig. 15 shows how the back-seat display control apparatus 104 receives the broadcast data. First, the back-seat display control apparatus 104 compares the received address B with the addresses in the address table 1033. If there is no address in the address table 1033 that matches the received address, the broadcast data received together with the address is discarded. In this example, as shown in Fig. 15, it is found that the addresses B and D match each other. As a result of this, the data B is stored in the buffer 1031 at a position corresponding to the address D.

In the above-described example, after the address adding apparatus 107 receives requested data, the controller 108 searches the queue 105 for addresses that are the same as an address of the requested data . However, the timing of searching the queue 105 is not limited to this . For example, the controller 108 may search the queue 105 for addresses that are the same as a data request address to be stored in the queue 105. Then, if it is found that the same address has already been stored in the queue, the address meant to be stored is discarded.

In the present example, two display control apparatuses are used. However, the present invention may be applied to any number of display control apparatuses.

### Improvement in Bus Traffic: 2

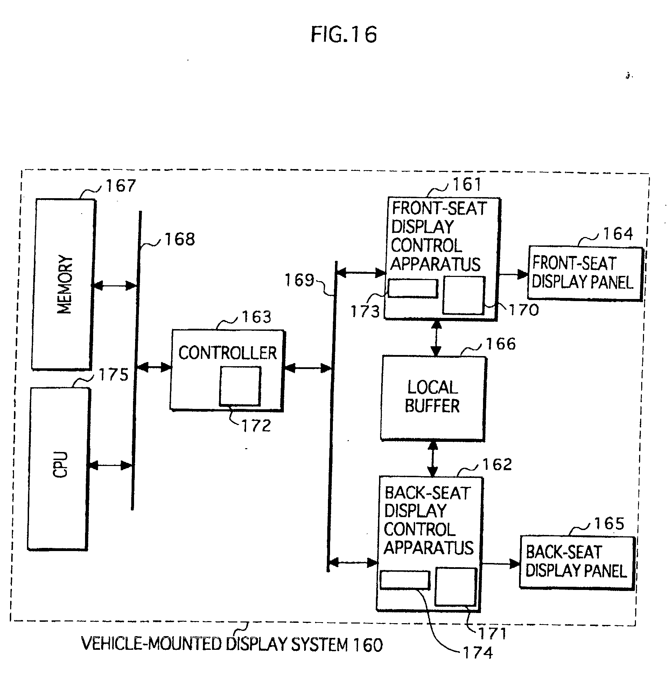

Fig. 16 shows the construction of a vehicle-mounted display system 160 with improvement in the bus traffic.

The vehicle-mounted display system 160 includes: a front-seat display panel 164; a front-seat display control apparatus 161 that is connected to the display panel 164 and has (a) a buffer 173 for storing pixel data and (b) an address table 170; a back-seat display panel 165; a back-seat display control apparatus 162 that is connected to the display panel 165 and has (a) a buffer 174 for storing pixel data and (b) an address table 171; a local buffer 166 that is connected to the front-seat display control apparatus 161 and the back-seat display control apparatus 162 and stores image data; a memory 167; a bus 168 used for transferring data from the memory 167 and the like; a controller 163 that includes a CPU and a memory storing various control programs and controls the data sources from which the front-seat display control apparatus 161 and the back-seat display control apparatus 162 fetch data; and a bus 169 used for transferring data or control signals between the front-seat display control apparatus 161, the back-seat display control apparatus 162, and the controller 163.

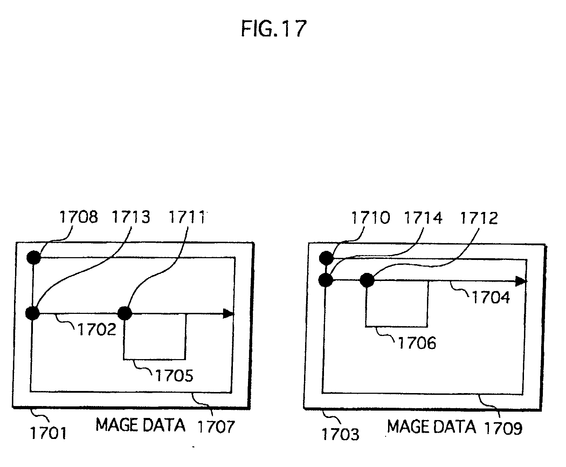

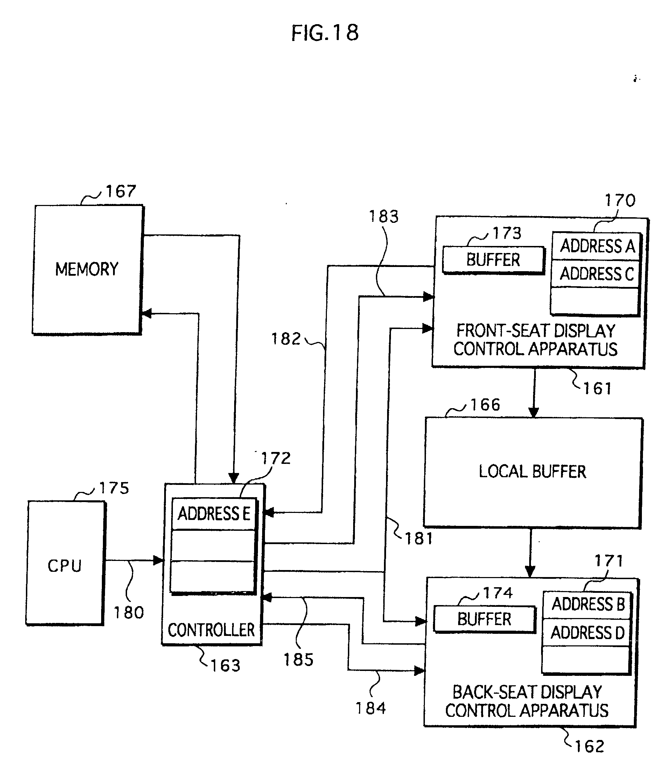

The operation of the vehicle-mounted display system with the above-described construction will be explained with reference to Figs. 17 and 18.

Fig. 17 shows: image data 1701 generated by the front-seat display control apparatus 161 from pixel data fetched from the memory 167; a scan line 1702 for which the front-seat display control apparatus 161 is fetching pixel data; image data 1703 generated by the back-seat display control apparatus 162 from pixel data fetched from the memory 167; and a scan line 1704 for which the back-seat display control apparatus 162 is fetching pixel data.

Now, how pixel data for the scan lines 1702 and 1704 is fetched will be described. It is supposed here that a rectangular-area data 1705 in the image data 1701 and a rectangular-area data 1706 in the image data 1703 consist of the same pieces of pixel data stored in a certain area of the memory 167.

Fig. 18 shows data and control flows in the vehicle-mounted display system.

First, the CPU 175 transmits the following data to the controller 163 over the path 180: (a) an address A in the memory 167 where the first pixel 1713 of the scan line 1702 in the image data 1701 generated by the front-seat display control apparatus 161 is stored; (b) an address B in the memory 167 where the first pixel 1714 of the scan line 1704 in the image data 1703 generated by the back-seat display control apparatus 162 is stored; (c) an address C in the memory 167 where the first pixel 1711 of the rectangular-area data 1705 in the image data 1701 generated by the front-seat display control apparatus 161 is stored; and (d) an address D in the memory 167 where the first pixel 1712 of the rectangular-area data 1706 in the image data 1703 generated by the back-seat display control apparatus 162 is stored.

Then, the controller 163 transmits the addresses received from the CPU 175 to the front-seat display control apparatus 161 and the back-seat display control apparatus 162 over the path 181. The front-seat display control apparatus 161 stores the addresses A and C in the address table 170. The back-seat display control apparatus 162 stores the addresses B and D in the address table 171. While performing the above operations, the controller 163 stores in the address table 172 addresses that are stored by the front-seat display control apparatus 161 and the back-seat display control apparatus 162 in common. In this example, the addresses C and D are the same. Accordingly, the same address, which is referred to as address E, is stored in the address table 172.

The front-seat display control apparatus 161 and the back-seat display control apparatus 162 then request pixel data to the controller 163 to generate the image data 1701 and 1703, respectively.

It should be noted here that in the present example, in response to a request for a certain amount of pixel data that is sent from a display control apparatus with specification of an address of the first pixel of the requested data, the memory 106 sends pixel data on a one-block-by-one-block basis, where one block consists of eight pixels, each pixel consisting of 16 bits, and each block having 128 bits (16 bytes).

Not limited to the above, a display control apparatus may send a request for a certain amount of pixel data with specification of an address of the first pixel of the requested data, and the memory 106 may send pixel data on a one-pixel-by-one-pixel basis.

Now, how the requested data at the addresses on the scan lines 1702 and 1704 are obtained in the order of addresses A, C, B, and D will be described.

The front-seat display control apparatus 161 refers to the address table 170 and requests pixel data as much as the width (horizontal length) of the rectangular-area data 1707 to the controller 163 by transmitting the address A of the first pixel 1713 of the scan line 1702 over the path 182. Upon receiving the address A, the controller compares the address A with the address E in the address table 172. In the present example, the controller 163 confirms that the addresses C and E are not the same. When such a judgment is made, the controller 163 fetches data from the address A in the memory 167 and transmits the fetched data to the front-seat display control apparatus 161 over the path 183.

The front-seat display control apparatus 161 then refers to the address table 170 and requests pixel data as much as the width (horizontal length) of the rectangular-area data 1705 to the controller 163 by transmitting the address C of the first pixel 1711 on the scan line 1702 over the path 182. Upon receiving the address C, the controller compares the address C with the address E in the address table 172. In the present example, the controller 163 confirms that the addresses A and E are the same. When such a judgment is made, the controller 163 issues an instruction to the front-seat display control apparatus 161 to store the data at the address C into the local buffer 166.

The controller 163 then transmits the data fetched from the address C of the memory 167 to the front-seat display control apparatus 161 over the path 183. The front-seat display control apparatus 161 stores the received data in the buffer 173 and the local buffer 166 at any location.

After this, the front-seat display control apparatus 161 keeps on storing the received data, which makes up the rectangular-area data 1705, in the local buffer 166 until the address table 170 is updated. Here, the address of the location in the local buffer 166 where the fetcheddata is stored is referred to as address F. The front-seat display control apparatus 161 transmits the address F to the controller 163 as it begins to store the data fetched from the address C in the memory 167 in the local buffer 166. Upon receiving the address F, the controller 163 issues an instruction to the back-seat display control apparatus 162 to obtain the requested data from the address F in the local buffer 166, not from the address D in the memory 167, where the addresses C, D, and E are the same.

The back-seat display control apparatus 162 refers to the address table 171 and requests pixel data as much as the width (horizontal length) of the rectangular-area data 1709 to the controller 163 by transmitting the address B of the first pixel 1714 of the scan line 1704 over the path 185. Upon receiving the address B, the controller compares the address B with the address E in the address table 172. In the present example, the controller 163 confirms that the addresses B and E are not the same. When such a judgment is made, the controller 163 fetches data from the address B in the memory 167 and transmits the fetched data to the back-seat display control apparatus 162 over the path 184. The back-seat display control apparatus 162 stores the received data in the buffer 174.

The back-seat display control apparatus 162 then based on the instruction issued from the controller 163 to obtain the requested data from the address F in the local buffer 166, fetches the data from the local buffer 166, and stores it in the buffer 174.

After completely fetching the data of the rectangular-area data 1705 from the memory 167, the front-seat display control apparatus 161 replaces the address C in the address table 170 with the address F. The back-seat display control apparatus 162 then continues to obtain data of the rectangular-area data 1706 from the local buffer 166, which has been stored therein by the front-seat display control apparatus 161 as the data of the rectangular-area data 1705.

When the data to be obtained is changed from the rectangular-area data 1705 or 1706 or the image data 1701 or 1703 to another data, the CPU 175 issues an instruction to the controller 163 to set new addresses in the front-seat display control apparatus 161 and the back-seat display control apparatus 162 to obtain newly requested data. The front-seat display control apparatus 161 and the back-seat display control apparatus 162 then start to obtain data from the memory 167 based on the updated addresses.

In the above-described example, two display apparatuses are used. However, the present invention may be applied to more than two display apparatuses. The above arrangement is particularly effective in the following case. That is, after the front-seat display control apparatus 161 has completed fetching the rectangular-area data 1705, the back-seat display control apparatus 162 can continue to obtain the same data from the local buffer 166, if necessary. When this happens, the data update information from the CPU 175 is not necessary. As understood from this, this feature is effective when the data to be fetched dynamically changes.

A front-seat display control apparatus may obtain data for a desired number of screens (for example, one screen of data) and store it in a local buffer. In such a case, a back-seat display control apparatus may be controlled to obtain image data from the local buffer, not from a memory.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A vehicle-mounted display system, comprising:
a first display panel;
a second display panel;
an image data fetching unit operable to fetch first image data and second image data;
a first display control unit operable to display the first image data on the first display panel;
an instruction unit operable to issue an instruction to display a composite image; and
a second display control unit operable to receive the instruction, generate the composite image by combining the first image data with the second image data, and display the composite image on the second display panel.

2. The vehicle-mounted display system of Claim 1, wherein
the instruction unit detects a trigger for issuing the composite image display instruction, based on vehicle position information that indicates a current position of a vehicle.

3. The vehicle-mounted display system of Claim 2, wherein
the instruction unit detects the trigger for issuing the composite image display instruction by comparing the vehicle position information with screen-change position information that is generated beforehand and indicates a position of the vehicle at which the composite image should be displayed.

4. The vehicle-mounted display system of Claim 1, wherein
the image data fetching unit includes a bus used for transferring image data including the first image data and/or the second image data to the first display control unit and the second display control unit.

5. The vehicle-mounted display system of Claim 4, wherein
each of the first display control unit and the second display control unit includes:
a receiving unit operable to receive a plurality of image planes that are composed of image data;
a calculation unit operable to select two or more image planes out of the plurality of image planes and performing an arithmetic and logic operation on the selected image planes; and
an output unit operable to output image data reflecting a result of the arithmetic and logic operation, to each display panel.

6. The vehicle-mounted display system of Claim 5, wherein
each of the first display control unit and the second display control unit includes
a pixel counting unit operable to count the number of pixels of each of the selected image planes in a horizontal direction and a vertical direction, and extracting rectangular-area data from each of the selected image planes, and
the calculation unit performs the arithmetic and logic operation on the extracted rectangular-area data.

7. The vehicle-mounted display system of Claim 1 further comprising:
a data request transmitting unit operable to receive data requests issued from the first and second display control units and transmitting the received data requests to a memory one by one in order of precedence;
a data request converting unit operable to, if the data request transmitting unit receives two or more data requests for a same piece of data in the memory, convert the two or more data requests into one data request; and
a broadcasting unit operable to broadcast data output from the memory to the first and second display control units.

8. The vehicle-mounted display system of Claim 7 further comprising:
an address adding unit operable to add an address in the memory to the data to be broadcast by the broadcasting unit; and
an address checking unit operable to check the address added to the broadcast data.

9. The vehicle-mounted display system of Claim 1 further comprising:
a local buffer which is connected to the first and second display control units and stores part or all of image data; and a controller which is connected to a memory via a bus and determines whether data requested by the first and second display control units should be fetched from either the memory or the local buffer.

10. The vehicle-mounted display system of Claim 9 further comprising:
an address management unit operable to manage addresses of shared data in the memory, the shared data being shared by the first and second display control units;
a request receiving unit operable to receive a data request for the shared data from one of the first and second display control units;
a data storage control unit operable to control the display control unit that has issued the shared data request so as to store the shared data in a local buffer; and
a data source controlling unit operable to control the other display control unit so as to fetch the shared data from the local buffer.

11. The vehicle-mounted display system of Claim 1 further comprising:
a data source controlling unit operable to fetch shared data from the memory, the shared data being shared by the first and second display control units, extracting a desired amount of image data from the shared data, storing the extracted image data in a local buffer, and performing control so that if the shared data is requested, the extracted image data in the local buffer is sent to a requester of the shared data.

12. A vehicle-mounted display system for displaying both map information images relative to vehicle position and secondary information images such as entertainment images on a plurality of display screens, comprising:
a receiver unit operable to generate location data indicative of the vehicle location relative to reference coordinates;
a storage unit operable to store first data to provide images indicative of map information for the vehicle location data;
a source unit operable to provide second data for providing images other than map information;
a first display panel operable to mount in a vehicle;
a second display panel operable to mount in a vehicle;
a user input unit operable to select a display of first data, second data, and a composite image display of images of respectively the first data and the second data simultaneously on at least one of the first display panel and the second display panel; and
a control unit operable to generate the composite image for display on one of the first display panel and the second display panel wherein a user can have the option of viewing respectively the first data, second data, and composite data independent of the displaying of images on the other of the first display panel and the second display panel.

13. The vehicle-mounted display system of Claim 12, further including, in the control unit, an instruction unit operable to compare the location data with predetermined screen-change position information to automatically cause the control unit to generate a composite image of first data images indicative of current map information with the second data images.

14. The vehicle-mounted display system of Claim 12, further including, in the control unit, a switching unit operable to switch between a single image display mode and a composite image display mode when the instruction unit changes a first displayed map image to a second displayed map image on the other of the first display panel and the second display panel.

15. The vehicle-mounted display system of Claim 12, further including a speed sensor to monitor the speed of the vehicle and, in the control unit, an instruction unit operable to automatically cause the control unit to generate a composite image of first data images and second data images at a predetermined speed of the vehicle which can be set to also include a zero speed for the vehicle.

16. The vehicle-mounted display system of Claim 12, wherein the control unit includes:
a first display control unit operable to display the first image data on the first display panel;
an instruction unit operable to issue an instruction to display a composite image; and
a second display control unit operable to receive the instruction, generate the composite image by combining the first image data with the second image data, and display the composite image on the second display panel.

17. The vehicle-mounted display system of Claim 16,
wherein:
each of the first display control unit and the second display control unit includes:
a receiving unit operable to receive a plurality of image planes that are composed of image data;
a calculation unit operable to select two or more image planes out of the plurality of image planes and perform an arithmetic and logic operation on the selected image planes; and
an output unit operable to output image data reflecting a result of the arithmetic and logic operation, to each display panel.

18. The vehicle-mounted display system of Claim 17,
wherein:
each of the first display control unit and the second display control unit includes:
a pixel counting unit operable to count the number of pixels of each of the selected image planes in a horizontal direction and a vertical direction, and extracting rectangular-area data from each of the selected image planes, and
the calculation unit performs the arithmetic and logic operation on the extracted rectangular-area data.

19. The vehicle-mounted display system of Claim 17, further comprising:
a data request transmitting unit operable to receive data requests issued from the first and second display control units and transmit the received data requests to a memory one by one in order of precedence;
a data request converting unit operable to, if the data request transmitting unit receives two or more data requests for a same piece of data in the memory, convert the two or more data requests into one data request; and
a broadcasting unit operable to broadcast data output from the memory to the first and second display control units.

20. Thevehicle-mounted display system of Claim 19, further comprising:
an address adding unit operable to add an address in the memory to the data to be broadcast by the broadcasting unit; and
an address checking unit operable to check the address added to the broadcast data.
